| | Europäisches Patentamt | | |
|---|---|---|---|
| (19) | European Patent Office | | |
| | Office européen des brevets | (11) | **EP 0 655 421 B1** |

(12) **FASCICULE DE BREVET EUROPEEN**

(45) Date de publication et mention
de la délivrance du brevet:
**23.07.1997 Bulletin 1997/30**

(51) Int. Cl.$^6$: **C02F 11/00**

(21) Numéro de dépôt: **94402691.3**

(22) Date de dépôt: **24.11.1994**

(54) **Procédé de fabrication d'un solide par mélange d'hydrates d'oxydes d'alcalino terreux et d'hydrates d'oxydes de métaux lourds**

Verfahren zur Herstellung von einem festen Stoff durch Mischung von Erdalkalioxydehydraten mit Schwermetalloxydehydraten

Process for the preparation of a solid by blending hydrates of hydrates of alkaline earth metal oxides and of hydrates of heavy metal oxides

(84) Etats contractants désignés:
**AT BE CH DE DK ES FR GB GR IE IT LI LU NL PT SE**

(30) Priorité: **26.11.1993 FR 9314192**

(43) Date de publication de la demande:
**31.05.1995 Bulletin 1995/22**

(73) Titulaire: **Pichat, Philippe**
**75004 Paris (FR)**

(72) Inventeur: **Pichat, Philippe**
**75004 Paris (FR)**

(74) Mandataire: **Schmit, Christian Norbert Marie**
**Cabinet Ballot-Schmit**
**7, rue Le Sueur**
**75116 Paris (FR)**

(56) Documents cités:
**EP-A- 0 050 371          EP-A- 0 389 328**
**DE-A- 2 917 123**

## Description

L'invention concerne un procédé de fabrication d'un solide et, plus particulièrement, un procédé de fabrication d'un solide pratiquement insoluble dans l'eau et non polluant.

Les eaux usées, d'origine industrielle ou municipale, appelées plus communément déchets liquides ou boues, sont habituellement traitées par divers procédés physico-chimiques qui visent, en particulier, à précipiter les métaux lourds qu'elles contiennent, sous la forme d'hydrates d'oxydes métalliques relativement peu solubles.

On sépare ensuite l'eau de ces hydrates, par exemple, par filtration. On obtient ainsi un gâteau comportant environ 60% d'eau. L'eau issue de la séparation peut être renvoyée dans l'environnement.

Les particules constitutives de ce gâteau ont en général un diamètre inférieur à 200 microns et ne sont pas liées entre elles. Aussi, le gâteau n'a qu'une faible résistance à la compression et pratiquement aucune cohésion. Une fois mis en décharge, il peut donc se désagréger et une partie des métaux lourds qu'il comporte est relarguée par lixiviation avec les eaux.

Afin de pallier ces inconvénients, le gâteau est parfois traité à l'aide du procédé décrit dans le brevet FR-A-2,644,358. On obtient alors un solide ayant de bonnes caractéristiques physico-chimiques dues à la présence de quantités substantielles de silicates et d'aluminates.

Ces quantités substantielles de silicates et d'aluminates se retrouvent d'ailleurs dans le solide obtenu à partir de cendres volantes d'incinération et selon le procédé décrit dans le document EP-A-0 389 328.

Toutefois, le traitement décrit dans ce brevet exige qu'on mélange la boue brute avec une source de chaux et de grandes quantités de silice et/ou d'alumine.

Or, la silice et/ou l'alumine sont des matériaux qui peuvent être coûteux et qui ne sont pas toujours disponibles au lieu de traitement.

De plus, la présence, dans les décharges, d'une quantité non négligeable de matières à base de silice et/ou d'alumine, qui ne peuvent être considérées *per se* comme des déchets, reste un inconvénient majeur qui semblait jusqu'à aujourd'hui inévitable.

Par ailleurs, le document DE-A1-2 917 123 décrit une méthode de traitement de boues inorganiques par mélange desdites boues avec 5 à 40 % en poids d'oxyde de calcium puis séchage du mélange obtenu à des températures comprises entre environ 900 et 1400°C en vue d'obtenir des produits dont les propriétés sont comparables à celles des ciments.

La présente invention a pour but de proposer un procédé de fabrication d'un solide, qui pallie les inconvénients précités, et qui permette, en particulier, d'obtenir, à moindre coût, un solide pratiquement insoluble dans l'eau et non polluant, sans utiliser de source de silice et/ou d'alumine, et en minimisant au maximum l'introduction dans ce solide, de matières qui ne peuvent être considérées comme des déchets. Ce but, ainsi que d'autres qui apparaîtront par la suite, sont atteints grâce à un procédé de fabrication d'un solide pratiquement insoluble dans l'eau et non polluant, caractérisé en ce qu'il comporte une étape selon laquelle on mélange, en milieu aqueux, au moins deux composés jusqu'à l'obtention d'une pâte dont la teneur en eau libre est comprise entre 20 % et 60 % en poids du mélange total et comportant moins de 20 % en poids d'$Al_2O_3$ et de $SiO_2$, un des composés ou premier composé comprenant des hydrates d'oxydes d'alcalino-terreux et étant sensiblement exempt d'oxydes d'alcalino-terreux, et un autre composé ou second composé comprenant des hydrates d'oxydes de métaux lourds ; le solide étant obtenu à partir de la pâte, sans étape supplémentaire de séchage de ladite pâte à des températures supérieures à 300°C, le poids des hydrates d'oxydes d'alcalino-terreux additionné au poids des hydrates d'oxydes de métaux lourds étant supérieur à 30% du poids total dudit solide.

La description qui va suivre, et qui ne présente aucun caractère limitatif, permettra de mieux comprendre la manière dont l'invention peut être mise en pratique.

Les eaux usées ou polluées, d'origine industrielle ou municipale, et appelées plus communément déchets liquides ou boues, sont traitées par divers procédés physico-chimiques qui visent, en particulier, à neutraliser les acides qu'elles contiennent, et à précipiter leurs métaux lourds sous la forme d'hydrates d'oxydes peu solubles. En Pratique, on ajoute à ces boues liquides, de la chaux et un sel de fer.

Après floculation puis décantation, l'eau est séparée des hydrates, par exemple, par centrifugation ou par filtration, en utilisant un filtre presse ou un filtre à bande.

On obtient alors un composé ou second composé, de très faible cohésion, inférieure à 5 kg/cm$^2$ environ. Ce second composé comprend une quantité sensible d'hydrates d'oxydes de métaux lourds sous la forme de particules dont le diamètre moyen est en général inférieur à 200 microns environ. Les particules d'hydrates de métaux lourds ne sont pas liées entre elles et restent sous une forme favorable à leur dissolution dans l'eau.

Dans le cas où on a utilisé, pour la précipitation, un sel de fer, la majeure partie des hydrates d'oxydes de métaux lourds est constituée par des hydrates d'oxydes de fer que l'on peut écrire $Me_p(OH)_n$ où Me est un métal et p et n sont des nombres entiers. Toutefois, d'autres hydrates de métaux lourds sont présents puisque la boue brute contient des quantités sensibles de, par exemple, Pb, Cd, Cr, Cu, Zn, Ni, Hg, Mn, Co, Ti et Sn.

Si l'on mélange le second composé avec un premier composé comprenant des hydrates d'oxydes d'alcalino-terreux que l'on peut noter $At(OH)_2$ où At est un alcalino-terreux, on obtient alors, en ajustant la quantité d'eau libre dans l'intervalle de 20 à 60%, et préférentiellement, dans l'intervalle de 30 à 50% du poids total du mélange, une pâte liquide qui a la propriété étonnante de former un solide pratiquement insoluble dans l'eau et non polluant.

Le premier composé comprend des alcalino-terreux sous la forme d'hydrates d'oxydes, essentiellement. Il est donc sensiblement exempt d'oxydes d'alcalino-terreux. En effet, les particules d'oxydes d'alcalino-terreux mélangées selon le procédé de la présente invention, en présence d'eau, s'hydratent, en général, en surface uniquement. Le coeur de ces particules reste alors, dans un premier temps, sous une forme oxydée. Dans un deuxième temps, l'eau diffuse au coeur des particules précitées et réagit peu à peu avec les oxydes. Or, la réaction

$$AtO + H_2O \rightarrow At(OH)_2$$

est une réaction qui s'accompagne d'une grande variation de volume. Aussi, les particules et le solide formé seront déstabilisés par des gonflements. On préfèrera donc, si l'on ne dispose que d'oxydes d'alcalino-terreux, ajouter une étape préalable au procédé de l'invention, qui consiste à hydrater ces oxydes avant leur mélange, afin de ne mélanger, essentiellement, que des hydrates d'oxydes d'alcalino-terreux en vue de former le solide. Dans le cas où l'alcalino-terreux du premier composé est le calcium, et par suite, dans le cas de la chaux, si la chaux est de la chaux vive, on l'éteint avant de la mélanger.

D'autre part, la réaction précitée

$$AtO + H_2O \rightarrow At(OH)_2$$

dégage une forte quantité d'énergie qui, si elle est trop importante, est nuisible au procédé puisqu'elle provoque un séchage du mélange.

Selon l'invention, le poids des hydrates d'oxydes de métaux lourds additionné au poids des hydrates d'oxydes d'alcalino-terreux est supérieur à 30% en poids, du solide obtenu.

La présence de chlorures, par exemple, à raison de 5% en poids environ, est favorable à la fabrication du solide.

Bien entendu, le mélangeage est suffisant pour que la pâte soit homogène. Il est donc réalisé à l'aide d'un malaxage particulièrement soigné effectué, par exemple, sous vide, et parfois à des températures excédant la température ambiante, jusqu'à 280°C, afin d'amener la quantité d'eau dans le mélange à un pourcentage adéquat.

Un séchage ultérieur au mélange, notamment, à des températures supérieures à 300°C serait néfaste à la fabrication du solide. En effet, la solidification est un processus lent qui nécessite la présence d'eau. Un séchage provoquerait une évaporation de l'eau, bloquant ainsi le processus de solidification. On ne cherchera donc pas, selon l'invention, à sécher le mélange obtenu.

Par ailleurs, la réaction se déroule préférentiellement à un pH compris entre 7,5 et 10,5 et, plus préférentiellement encore, à un pH compris entre 8,5 et 9,5.

La fabrication du solide peut s'expliquer par le fait qu'en milieu particulièrement concentré, les molécules d'hydrates d'oxydes d'alcalino-terreux et les molécules d'hydrates d'oxydes de métaux lourds interagissent entre elles de manière à constituer, une fois que l'agitation du mélange est stoppée, une liaison suffisamment forte pour former un solide, grâce à la présence de composés du type $[xMe_p(OH)_n, yAt(OH)_2, zH_2O]$ où x, y, z, sont des nombres entiers. Si l'eau n'est pas présente, dans le mélange, en quantité suffisante, elle agit comme un facteur limitant de la réaction de fabrication du solide. Par contre, si elle est présente, dans le mélange, en quantité trop importante, elle disperse les molécules et les liaisons intermoléculaires, trop affaiblies, ne sont plus suffisantes pour permettre la fabrication d'un solide.

Le rapport entre le nombre de moles d'hydrates d'oxydes de métaux lourds et le nombre de moles d'hydrates d'oxydes d'alcalino-terreux est avantageusement voisin de 1. Néanmoins, ce rapport peut varier dans des limites comprises entre 0,5 et 5.

Comme les composés de départ ne comportent pas ou peu de silice et/ou d'alumine, le solide obtenu est sensiblement exempt de silicates et d'aluminates. Toutefois, la présence d'une faible quantité d'$Al_2O_3$ et de $SiO_2$ dans le mélange, par exemple, inférieure à 20% n'est pas gênante. C'est la raison pour laquelle le procédé peut être mis en oeuvre sur des boues rouges en provenance de Gardanne (France), qui sont des résidus de fabrication de l'alumine par un procédé utilisant la bauxite comme matière première, et dont la teneur en $SiO_2$, additionnée à la teneur en $Al_2O_3$, est de l'ordre de 20%.

Les propriétés mécaniques du solide s'améliorent au cours du temps. La solubilité dans l'eau diminue parallèlement. Elle est, en général, inférieure à 5% au bout de quelques mois, par exemple, au bout de 10 mois.

Des exemples de réalisation ci-après permettront de mieux apprécier l'intérêt de l'invention, relativement aux caractéristiques du solide obtenu.

Exemple 1 :

Le premier exemple de réalisation illustre l'intérêt de l'invention relativement à la lixiviation.

Dans cet exemple, on met en oeuvre un Gâteau de Filtre Presse (GFP), sensiblement exempt de silice et/ou d'alumine, et comportant 60% d'eau. Ce GFP a été obtenu classiquement après floculation, décantation, et filtration d'une boue brute à laquelle on a ajouté du sulfate de fer.

On mélange 100 kg de ce GFP avec 30 kg de chaux hydratée et de l'eau. L'eau est présente à raison de 45% du poids total du mélange final.

Une réaction exothermique se déclenche rapidement. La température atteint alors une quarantaine de degrés Celsius, et le mélange se solidifie en quelques heures.

Un échantillon du solide monolithique obtenu est stocké pendant 80 jours avant d'être soumis au test de lixiviation AFNOR X31210. Selon ce test, on obtient, pour différents métaux lourds, 3 séries de mesures I, II, III, relatives à la DCO et à la lixiviation.

Parallèlement, on effectue le même test sur la boue brute.

On a alors les résultats suivants, rassemblés dans le tableau 1, et exprimés en mg par kg :

Tableau 1

|       | Boue brute | Solide  |
|-------|------------|---------|
| DCO   | 4200       | 500     |
| Pb    | 0,16       | < 0,03  |
| Cd    | 0,19       | 0,1     |
| Cr    | 0,4        | 0,1     |
| Cu    | 1,63       | 0,2     |
| Zn    | 9,78       | 0,3     |
| Cr6+  | < 0,3      | < 0,1   |
| Ni    | 2,87       | 0,2     |

Les mêmes tests ont été effectués avec de la chaux magnésienne.

On obtient des résultats similaires.

Exemple 2 :

Cet exemple établit une comparaison entre le procédé connu de traitement des déchets avec de la silice et/ou de l'alumine, et le procédé de l'invention.

Dans cet exemple, on met en oeuvre des Résidus d'Epuration des Fumées (REF) provenant d'un incinérateur de traitement de déchets industriels, qui comprennent, notamment, des chlorures inorganiques et des métaux lourds.

Ces REF sont sensiblement exempts de silice et/ou d'alumine.

Dans un premier essai, on a mélangé, à température ambiante, 151 kg de REF avec de l'eau, 33 kg de silice, et 100 kg du GFP précédemment obtenu.

Immédiatement, une réaction exothermique se déclenche. La température du mélange atteint 45°C, et celui-ci se solidifie en quelques heures. Le solide monolithique obtenu comporte un fort pourcentage de silicates.

Un échantillon 1 de ce solide est conservé pendant 45 jours. Il est alors soumis au test de lixiviation AFNOR X31210.

Dans un second essai, on a mélangé selon les mêmes conditions de température, 150 kg de REF, avec 100 kg de GFP. La quantité d'eau libre dans le mélange a été réglée à environ 40 % du poids total de celui-ci.

Immédiatement, une réaction exothermique se déclenche. La température atteint alors une quarantaine de degrés, et le mélange se solidifie.

Un échantillon 2 selon l'invention est conservé dans les mêmes conditions que l'échantillon 1, et il est soumis au même test.

On obtient les résultats suivants, exprimés en mg/kg, et consignés dans le tableau 2 ci-dessous :

Tableau 2

| | Echantillon 2 | | | Echantillon 1 | | |
|---|---|---|---|---|---|---|
| | I | II | III | I | II | III |
| DCO | 300 | 200 | < 100 | 400 | 100 | < 100 |
| Phénol | 0,15 | 0,25 | 0,48 | 0,20 | 0,31 | 0,30 |
| CN- | 0,20 | 0,30 | 0,20 | 0,17 | 0,13 | 0,0 |
| Pb | < 0,01 | < 0,01 | < 0,01 | < 0,01 | < 0,01 | < 0,01 |
| Cd | 0,08 | 0,07 | 0,08 | 0,07 | 0,07 | 0,07 |
| Cr | 0,09 | 0,07 | 0,06 | 0,36 | 0,15 | 0,10 |
| Cu | 0,24 | 0,20 | 0,21 | 0,22 | 0,17 | 0,14 |
| Fe | 0,60 | 0,63 | 0,54 | 1,41 | 1,06 | 0,55 |
| Zn | 1,77 | 0,53 | 0,42 | 0,32 | 0,24 | 0,16 |
| Cr6+ | < 0,10 | < 0,10 | < 0,10 | < 0,10 | < 0,10 | < 0,10 |
| Ni | 0,11 | 0,07 | 0,05 | 0,10 | 0,06 | 0,07 |

De façon surprenante, les résultats de lixiviation obtenus pour l'échantillon 2 selon l'invention sont similaires à ceux obtenus pour l'échantillon 1.

Par contre, un test de pénétration avec l'aiguille de Vicat indique qu'à 45 jours, la résistance à la compression de l'échantillon 2 est d'environ 3 MPa alors que celle de l'échantillon 1 est de 6 MPa.

Seulement, les propriété mécaniques du solide de l'invention s'améliorent pendant 18 mois environ quand il est stocké à température ordinaire. On peut estimer que la résistance à la compression d'un solide de l'invention sera, à 18 mois, de 20 MPa environ.

De même, la fraction soluble des échantillons 2 selon l'invention diminue progressivement. En effet, elle est d'environ : 9 % à 1 mois, 8 % à 4 mois, 5 % à 8 mois, et d'environ 3,5 % à 14 mois.

Exemple 3 :

Dans cet exemple, on met en oeuvre 40 kg du GFP précédent, que l'on sèche à 200 °C. On ajoute alors, à ce gâteau, 150 kg de REF et une quantité d'eau correspondant à environ 40 % du mélange.

Comme dans l'exemple précédent, une réaction exothermique se déclenche, et la température du mélange atteint alors les 40 °C.

A 65 jours, le solide obtenu est soumis au test de lixiviation AFNOR X31210 et l'on obtient les résultats du tableau 3 ci-dessous, exprimés en mg/kg.

Tableau 3

|  | I | II | III |
|---|---|---|---|
| DCO | 100 | 300 | 100 |
| Phénol | < 0,01 | 0,20 | 0,19 |
| Pb | < 0,01 | < 0,01 | < 0,01 |
| Cd | 0,09 | 0,07 | 0,08 |
| Cr | 0,32 | 0,4 | 0,2 |
| Cu | 0,60 | 0,93 | 0,66 |
| Fe | 4,81 | 5,21 | 5,18 |
| Zn | 0,38 | 0,50 | 0,40 |
| Cr6+ | 0,35 | 0,17 | 0,16 |
| Ni | 0,23 | 0,29 | 0,19 |

Exemple 4 :

Dans cet exemple, on a mélangé 100 kg de REF et 40 kg de boues rouges en provenance de Gardanne (France), qui comportent, notamment 27 % de $Fe_2O_3$. L'eau est présente, dans le mélange, à raison de 40% environ.

A 28 jours, le solide obtenu est soumis au test de lixiviation AFNOR X31210. On obtient les résultats suivants, exprimés en mg/kg.

Tableau 4

|  | I | II | III |
|---|---|---|---|
| pH | 12 | 7 | 7 |
| DCO | 1000 | 500 | 200 |
| Phénol | < 2 | < 2 | < 2 |
| Cn- | < 0,5 | < 0,5 | < 0,5 |
| Cr 6+ | 0,2 | 0,05 | 0,06 |
| Cd | < 0,1 | < 0,1 | < 0,1 |
| Cr | 0,24 | 0,01 | 0,03 |
| Cu | < 0,2 | < 0,2 | < 0,2 |
| Fe | 0,33 | 0,18 | 0,3 |
| Ni | < 0,01 | < 0,01 | < 0,01 |
| Pb | 0,01 | 0,1 | 0,12 |
| Zn | < 0,01 | < 0,01 | < 0,03 |

Bien entendu, le procédé de fabrication d'un solide de l'invention s'applique notamment dans le domaine d'activités anti-pollutions en vue, par exemple, d'un stockage. Toutefois, l'invention dépasse le cadre défini par le domaine du traitement de déchets. En effet, l'invention trouve aussi une application particulièrement intéressante, par exemple, dans le domaine du Bâtiments et des Travaux Publics, en vue d'une fabrication d'un matériau de gros oeuvre.

**Revendications**

1. Procédé de fabrication d'un solide pratiquement insoluble dans l'eau et non polluant, caractérisé en ce qu'il comporte une étape selon laquelle on mélange, en milieu aqueux, au moins deux composés jusqu'à l'obtention d'une pâte dont la teneur en eau libre est comprise entre 20 % et 60 % en poids du mélange total et comportant moins de 20 % en poids d'$Al_2O_3$ et de $SiO_2$, un des composés ou premier composé comprenant des hydrates d'oxydes d'alcalino-terreux, et un autre composé ou second composé comprenant des hydrates d'oxydes de métaux lourds ; le solide étant obtenu à partir de la pâte, sans étape supplémentaire de séchage de ladite pâte à des températures supérieures à 300°C, le poids des hydrates d'oxydes d'alcalino-terreux additionné au poids des hydrates d'oxydes de métaux lourds étant supérieur à 30% du poids total dudit solide.

2. Procédé selon la revendication 1, caractérisé en ce que le premier composé est sensiblement exempt d'oxydes d'alcalino-terreux.

3. Procédé selon l'une des revendications 1 ou 2, caractérisé en ce que l'on ajoute 5% en poids du mélange total de chlorures.

4. Procédé selon l'une des revendications 1, 2 ou 3, caractérisé en ce que le mélange est effectué à une température inférieure à 280° C, et à pH compris entre 7,5 et 10,5.

5. Procédé selon l'une des revendications précédentes, caractérisé en ce que le mélange est effectué sous vide.

6. Procédé selon l'une des revendications précédentes, caractérisé en ce que l'alcalino-terreux est le calcium ou le magnésium.

7. Procédé selon la revendication 6, caractérisé en ce que l'hydrate d'oxyde d'alcalino-terreux est de la chaux ou de la magnésie.

8. Procédé selon l'une des revendications précédentes, caractérisé en ce que le premier composé comprenant de l'hydrate d'oxyde d'alcalino-terreux est un Résidu d'Epuration des Fumées.

9. Procédé selon l'une des revendications précédentes, caractérisé en ce que le second composé comprend des hydrates d'oxydes de métaux lourds sous la forme de particules dont le diamètre moyen est inférieur à 200 microns environ.

10. Procédé selon l'une des revendications précédentes, caractérisé en ce que le métal lourd est constitué par l'un au moins des métaux suivants : chrome, manganèse, fer, cobalt, nickel, cuivre, zinc, cadmium, plomb, titane, étain et mercure.

11. Procédé selon la revendication 10, caractérisé en ce que le second composé comprenant des hydrates d'oxydes de métaux lourds est obtenu suite au traitement des eaux usées, après centrifugation ou filtration, à l'aide d'un filtre-presse ou d'un filtre à bande.

12. Procédé selon l'une des revendications précédentes, caractérisé en ce que, préalablement au mélange, on hydrate des oxydes d'alcalino-terreux en vue d'obtenir des hydrates d'oxyde d'alcalino-terreux.

13. Procédé selon l'une des revendications précédentes, caractérisé en ce que, dans le solide obtenu, on a des composés du type $[xMep(OH)_n, yAt(OH)_2, z(H_2O)]$ où x, y, z, p, n sont des nombres entiers.

**Claims**

1. A process for producing a solid which is virtually insoluble in water and non-polluting, characterised in that it comprises one stage in which at least two compounds are mixed in aqueous medium until a paste is obtained whose free water content is between 20 wt.% and 60 wt.%, with respect to the total mixture, and which contains less than 20 wt.% of $Al_2O_3$ and $SiO_2$, one of the compounds or the first compound consisting of alkaline earth hydroxides, and another compound or the second compound consisting of heavy metal hydroxides; the solid being obtained from the paste, without an additional drying stage for the said paste at temperatures above 300°C, the weight of the alkaline earth hydroxides plus the weight of the heavy metal hydroxides being greater than 30 % of the total weight of the said solid.

2. A process according to Claim 1, characterised in that the first compound is substantially free of alkaline earth oxides.

3. A process according to one of Claims 1 or 2, characterised in that 5 wt.%, with respect to the total mixture, of chlorides are added.

4. A process according to Claims 1, 2 or 3, characterised in that the mixture is made up at a temperature lower than 280°C and at a pH between 7.5 and 10.5.

5. A process according to one of the preceding Claims, characterised in that the mixture is made up under vacuum.

6. A process according to one of the preceding Claims, characterised in that the alkaline earth metal is calcium or magnesium.

7. A process according to Claim 6, characterised in that the alkaline earth hydroxide is lime or magnesia.

8. A process according to one of the preceding Claims, characterised in that the first compound composed of the alkaline earth hydroxide is a Fume Cleaning Residue.

9. A process according to one of the preceding Claims, characterised in that the second compound contains heavy metal hydroxides in the form of particles whose average diameter is less than about 200 microns.

10. A process according to one of the preceding Claims, characterised in that the heavy metal comprises one or more of the following metals: chromium, manganese, iron, cobalt, nickel, copper, zinc, cadmium, lead, titanium, tin and mercury.

11. A process according to Claim 10, characterised in that the second compound containing heavy metal hydroxides is obtained following sewage treatment, after centrifugation or filtration, using a filter press or a band filter.

12. A process according to one of the preceding Claims, characterised in that alkaline earth oxides are hydrated prior to mixing, in order to obtain alkaline earth hydroxides.

13. A process according to one of the preceding Claims, characterised in that compounds of the type $[xMe_p(OH)_n.yAt(OH)_2.z(H_2O)]$, where x, y, z, p and n are whole numbers, are present in the solid obtained.

**Patentansprüche**

1. Verfahren zur Herstellung eines in Wasser praktisch unlöslichen und umweltverträglichen Feststoffes, dadurch gekennzeichnet, daß es einen Schritt umfaßt, in dem mindestens zwei Verbindungen in wäßrigem Medium bis zum Erhalt einer Paste vermischt werden, deren Gehalt an freiem Wasser im Bereich von 20 bis 60 Gew.-%, bezogen auf das Gesamtgewicht des Gemisches, liegt und die weniger als 20 Gew.-% $Al_2O_3$ und $SiO_2$ enthält, wobei eine der Verbindungen oder die erste Verbindung Erdalkalihydroxide und die andere Verbindung oder die zweite Verbindung Schwermetallhydroxide umfaßt, und wobei der Feststoff aus der Paste ohne zusätzlichen Schritt der Trocknung der Paste bei Temperaturen über 300 °C hergestellt wird und das Gewicht der den Schwermetallhydroxiden zugegebenen Erdalkalihydroxide über 30 Gew.-%, bezogen auf das Gesamtgewicht des Feststoffs, beträgt.

2. Verfahren nach Anspruch 1, dadurch gekennzeichnet, daß die erste Verbindung im wesentlichen frei von Erdalkalioxiden ist.

3. Verfahren nach einem der Ansprüche 1 oder 2, dadurch gekennzeichnet, daß 5 Gew.-% Chloride, bezogen auf das Gesamtgewicht des Gemisches, zugegeben werden.

4. Verfahren nach einem der Ansprüche 1, 2 oder 3, dadurch gekennzeichnet, daß das Mischen bei einer Temperatur unter 280 °C und bei einem pH-Wert im Bereich von 7,5 bis 10,5 durchgeführt wird.

5. Verfahren nach einem der vorhergehenden Ansprüche, dadurch gekennzeichnet, daß das Mischen im Vakuum durchgeführt wird.

6. Verfahren nach einem der vorhergehenden Ansprüche, dadurch gekennzeichnet, daß das Erdalkalimetall Calcium oder Magnesium ist.

7. Verfahren nach Anspruch 6, dadurch gekennzeichnet, daß das Erdalkalihydroxid Calciumhydroxid oder Magnesiumhydroxid ist.

8. Verfahren nach einem der vorhergehenden Ansprüche, dadurch gekennzeichnet, daß die erste Verbindung, die Erdalkalihydroxide umfaßt, ein Rückstand aus der Rauchgasreinigung ist.

9. Verfahren nach einem der vorhergehenden Ansprüche, dadurch gekennzeichnet, daß die zweite Verbindung Schwermetallhydroxide in Form von Partikeln umfaßt, deren mittlerer Durchmesser unter etwa 200 µm liegt.

10. Verfahren nach einem der vorhergehenden Ansprüche, dadurch gekennzeichnet, daß das Schwermetall aus mindestens einem der folgenden Metalle besteht: Chrom, Mangan, Eisen, Cobalt, Nickel, Kupfer, Zink, Cadmium, Blei, Titan, Zinn und Quecksilber.

11. Verfahren nach Anspruch 10, dadurch gekennzeichnet, daß die zweite Verbindung, die Schwermetallhydroxide umfaßt, im Anschluß an die Behandlung von Abwässern nach Zentrifugieren oder Filtrieren mit einer Filter-Presse oder einem Bandfilter hergestellt ist.

12. Verfahren nach einem der vorhergehenden Ansprüche, dadurch gekennzeichnet, daß vor dem Mischen Erdalkalioxide hydratisiert werden, um Erdalkalihydroxide herzustellen.

13. Verfahren nach einem der vorhergehenden Ansprüche, dadurch gekennzeichnet, daß in dem erhaltenen Feststoff Verbindungen des Typs $[xMe_p(OH)_n, yAt(OH)_2, z(H_2O)]$ vorliegen, worin x, y, z, p und n ganze Zahlen bedeuten.